# EUROPÄISCHE PATENTANMELDUNG

(11) **EP 3 079 235 A1**
(43) Veröffentlichungstag der Anmeldung: **12.10.2016**
(21) Anmeldenummer: 15163183.5
(22) Anmeldetag: 10.04.2015
(51) Int. Cl.: H02K 3/34, H02K 3/52, B02C 17/00

(54) **ELEKTRISCH ISOLIEREND BESCHICHTETES POLEISEN IM ROTOR EINER ELEKTRISCHEN ROTIERENDEN MASCHINE**

(71) Anmelder: Siemens Aktiengesellschaft, 80333 München (DE)
(72) Erfinder: Hartmann, Ulrich, 14197 Berlin (DE); Kümmlee, Horst, 13505 Berlin (DE); Rakowicz, Marian, 10247 Berlin (DE); Walberer, Georg, 95506 Kastl (DE)

(57) **Zusammenfassung**

Die Erfindung betrifft einen Rotor (4) einer Synchronschenkelpolmaschine (1), insbesondere zum getriebelosen Antrieb von Rohrmühlen, mit einer Mehrzahl an Polsegmenten (6), welche kreisförmig um eine Rotationsachse (5) des Rotors (4) angeordnet sind, wobei ein Polsegment (6) mindestens einen Polkörper (8) aufweist, wobei ein Polkörper (8) ein Poleisen (9) und eine Erregerspule (10) aufweist, wobei die Erregerspule (10) um das Poleisen (9) gewickelt ist und wobei zumindest Teile des Poleisens (9) eine Beschichtung (23) aufweisen. Um, im Vergleich zum Stand der Technik, eine schnellere und günstigere Inbetriebnahme sowie einen effizienteren und kostengünstigeren Betrieb der Synchronschenkelpolmaschine (1) zu gewährleisten, wird vorgeschlagen die Beschichtung (23) elektrisch isolierend auszuführen und dafür vorzusehen, einen Kurzschluss zwischen der Erregerspule (10) und dem Poleisen (9) zu verhindern.

## Beschreibung

Die Erfindung betrifft einen Rotor einer Synchronschenkelpolmaschine, insbesondere zum getriebelosen Antrieb von Rohrmühlen, mit einer Mehrzahl an Polsegmenten, welche kreisförmig um eine Rotationsachse des Rotors angeordnet sind, wobei ein Polsegment mindestens einen Polkörper aufweist, wobei ein Polkörper ein Poleisen und eine Erregerspule aufweist, wobei die Erregerspule um das Poleisen gewickelt ist, wobei zumindest Teile des Poleisens eine Beschichtung aufweisen.

Weiterhin betrifft die Erfindung eine Synchronschenkelpolmaschine mit mindestens einem derartigen Rotor.

Ein derartiger Rotor kommt insbesondere bei sehr großen segmentierten Synchronschenkelpolmaschinen, beispielsweise zum getriebelosen Antrieb von Rohrmühlen, mit einer Leistung von mehr als fünf Megawatt und einem großen Durchmesser von beispielsweise fünfzehn Metern zum Einsatz. Bei der Synchronschenkelpolmaschine handelt es sich bevorzugt um einen Motor oder einen Generator. Eine segmentierte Synchronschenkelpolmaschine weist einen Stator und einen Rotor auf, wobei der Rotor im Stator um eine Rotationsachse drehbar ist, wodurch eine axiale Richtung und eine radiale Richtung definiert sind. Der Rotor weist eine Vielzahl von Polsegmenten auf, welche beispielsweise vier Polkörper, auch Erregerpole genannt, aufweisen, und auf einem um die Rotationsachse angeordneten Kreisumfang angeordnet sind. Eine Erregerspule ist auf einem Polkörper um ein Poleisen, ein elektrisch notwendiges Eisenteil, welches beispielsweise in Form eines Blechpakets realisiert ist, gewickelt.

Eine Isolation der Erregerspule ist aus thermischen Gründen sehr aufwendig. Häufig ist außerdem mit einer elektrischen Isolation der Erregerspule eine Erhöhung des thermischen Übergangswiderstandes verbunden. Deshalb werden die Läuferspulen aus thermischen Gründen und Kostengründen nicht elektrisch isoliert ausgeführt. Daraus ergeben sich Probleme durch Erdungsschlüsse bei langsam laufenden Synchronmaschinen mit hohem Drehmoment, welche durch Feuchtigkeit und/oder Verschmutzung an elektrisch aktiven Teilen des Erregerpols hervorgerufen werden. Die Feuchtigkeit lagert sich an elektrisch kritischen Stellen ab, sodass Kurzschlüsse zwischen Erregerspule und Poleisen entstehen. Der Fehler tritt häufig bei der Inbetriebnahme, der Montage oder nach einer Wartungsphase eines Motors auf.

Bisher werden die Erregerspulen durch Einspeisung eines Stromes geheizt, wodurch die abgelagerte Feuchtigkeit verdampfen soll, um den Ursprungszustand wieder herzustellen. Dadurch entstehen Wartezeiten während der Errichtung oder während des Betriebes des Motors, die zu nicht unerheblichen Ertragsausfällen führen. Wenn Erdungsschlüsse durch das Heizen nicht beseitigbar sind, müssen die betroffenen Polsegmente getauscht werden.

Aus DE 197 35 748 A1 sind Elektroblechsegmente sowie Leiter einer Spulenwicklung für Statoren oder Rotoren elektrischer Maschinen bekannt, die zur magnetischen Isolierung zumindest bereichsweise eine isolierende Pulverlackbeschichtung aufweisen.

Aus WO 2007/107134 A1 ist ein Stator bekannt, bestehend aus mehreren miteinander in Verbindung stehenden Statormodulen, welche Wicklungsnuten bilden, in die Statorwicklungen eingebracht sind, wobei sich in den Wicklungsnuten zwischen den Statormodulen und den Statorwicklungen eine elektrisch isolierende Beschichtung befindet, und wobei die Polschuhe Seitenflächen aufweisen, die zu den gegenüberliegenden Seitenflächen der Polschuhe benachbarter Statormodule in Umfangsrichtung einen Nutspalt aufweisen.

Der Erfindung liegt die Aufgabe zugrunde, einen Rotor für eine Synchronschenkelpolmaschine der eingangs genannten Art bereitzustellen, welcher, im Vergleich zum Stand der Technik, eine schnellere und günstigere Inbetriebnahme sowie einen effizienteren und kostengünstigeren Betrieb der Synchronschenkelpolmaschine gewährleistet.

Diese Aufgabe wird durch einen Rotor der eingangs genannten Art dadurch gelöst, dass die Beschichtung elektrisch isolierend ausgeführt ist und dafür vorgesehen ist, einen Kurzschluss zwischen der Erregerspule und dem Poleisen zu verhindern.

Weiterhin wird die Aufgabe durch eine Synchronschenkelpolmaschine mit mindestens einem derartigen Rotor gelöst.

Da eine Isolation der Erregerspule aus thermischen Gründen sehr aufwendig ist, ist es vorteilhaft das Poleisen, welches auch Läufereisen genannt wird, elektrisch zu isolieren. Häufig ist außerdem mit einer elektrischen Isolation der Erregerspule eine Erhöhung des thermischen Übergangswiderstandes verbunden. Da das Läufereisen während des Betriebes nur geringfügig erwärmt wird, ist eine Isolation des Poleisens vorteilhaft gegenüber einer Isolation der Spule. Ein Erdungsschluss wird durch die Isolation des Poleisens mit einer elektrisch isolierenden Beschichtung auch beim Auftreten von Feuchtigkeit und/oder Verschmutzung verhindert. Wartezeiten während der Montage, der Inbetriebnahme oder während des Betriebes der Synchronschenkelpolmaschine, die zu nicht unerheblichen Ertragsausfällen führen können, werden vermieden.

Besonders vorteilhaft ist die Erregerspule über eine dielektrische Halterung mechanisch mit dem Poleisen verbunden. Eine elektrisch leitfähige Verbindung zwischen der Erregerspule und dem Poleisen besteht nicht. Die dielektrische Halterung erzeugt einen definierten Abstand zwischen der Erregerspule und dem Poleisen wodurch die einzelnen Polkörper nahezu identische elektrische Eigenschaften aufweisen. Weiterhin wird die Spule so einfach, kostengünstig und verlustarm mechanisch stabilisiert.

In einer bevorzugten Ausführung weist die dielektrische Halterung eine Kriechwegverlängerung auf. Diese zusätzliche Möglichkeit der Vermeidung eines Erdungsschlusses schafft Redundanz und erhöht die Sicherheit.

Bevorzugt ist die Erregerspule als Scheibenspule ausgeführt. Hierbei kann die Scheibenspule beispielhaft aus einem Bandleiter oder mehreren Bandleitern gewickelt werden. Ein Bandleiter besteht beispielsweise aus Kupfer. Durch die Verwendung einer Scheibenspule ergeben sich bessere Möglichkeiten der Kühlung der Spule im Betrieb, beispielsweise mit speziellen Kühlwindungen.

Bei einer weiteren vorteilhaften Ausgestaltung ist die elektrisch isolierend ausgeführte Beschichtung zumindest auf einer elektrisch aktiven Kontur des Poleisens und/oder zumindest an einer kritischen Stelle des Poleisens aufgebracht. Dies führt zu einer Kostenersparnis im Vergleich zu einer kompletten isolierend ausgeführten Beschichtung des Poleisens.

In einer bevorzugten Ausführung ist die elektrisch isolierend ausgeführte Beschichtung zusätzlich dafür vorgesehen, eine Korrosion des Poleisens zu verhindern. Das Poleisen, welches bereits bisher aus Korrosionsschutzgründen lackiert wird, wird mit einer Beschichtung oder Teilbeschichtung versehen, die Korrosionsschutz und elektrische Isolation gewährleistet. Daher ist beispielsweise die Integration isolierend ausgeführte Beschichtung in einen bisherigen Fertigungsschritt möglich. Dies führt zu einer Kostenersparnis.

Bei einer weiteren vorteilhaften Ausgestaltung ist die elektrisch isolierend ausgeführte Beschichtung zusätzlich zum mechanischen Schutz des Poleisens vorgesehen. Dies ist beispielsweise durch das Auftragen einer robusteren Beschichtung möglich und verhindert eine Beschädigung der Beschichtung während der Montage und/oder während des Transportes.

Bevorzugt ist die elektrisch isolierend ausgeführte Beschichtung des Poleisens mehrlagig und/oder aus unterschiedlichen Materialen ausgeführt. Beispielsweise werden ein mechanischer Schutz durch eine außenliegende möglicherweise robustere Beschichtung und eine elektrische Isolation durch eine innenliegende Beschichtung gewährleistet. Die Verwendung mehrerer Lagen mit möglicherweise unterschiedlichen Materialien verbessert die Qualität der Beschichtung.

Bei einer weiteren vorteilhaften Ausgestaltung weist die elektrisch isolierend ausgeführte Beschichtung des Poleisens eine erste Beschichtung und eine zweite Beschichtung auf, wobei die erste Beschichtung zur elektrischen Isolierung des Poleisens gegenüber der Erregerspule vorgesehen ist und die zweite Beschichtung zum Schutz des Poleisens vor Korrosion vorgesehen ist. Die beiden Beschichtungen bieten einen guten Schutz für das Poleisen während der Montage, der Inbetriebnahme oder während des Betriebes und sind einfach und kostengünstig in der Herstellung.

In einer bevorzugten Ausführung weist die elektrisch isolierend ausgeführte Beschichtung des Poleisens eine kathodische Tauchlackierung (KTL) und/oder eine keramische Beschichtung auf. Eine kathodische Tauchlackierung wird auch Kataphorese genannt und ist ein elektrochemisches Verfahren, bei dem das Poleisen in einem Tauchbad beschichtet wird. Die kathodische Lackierung im Tauchbad ist vorteilhaft für das Lackieren komplizierter Strukturen und ist für große Stückzahlen geeignet. KTL bietet einen wirksamen und lang anhaltenden Korrosionsschutz, der kratzfest und beständig gegen Steinschlag und Salzwasser ist. Eine keramische Beschichtung, beispielsweise aus Aluminiumoxid oder Zirkoniumoxid, zeichnet sich durch eine gute elektrische Isolation aus. Eine Schicht aus Glas oder Emaille ist möglicherweise auch als Isolierschicht geeignet. Figurenüberblick: Im Folgenden wird die Erfindung anhand der in den Figuren dargestellten Ausführungsbeispiele näher beschrieben und erläutert.

Es zeigen:
- FIG 1: eine prinzipielle Darstellung einer Synchronschenkelpolmaschine,
- FIG 2: eine dreidimensionale Darstellung eines vierpoligen Polsegments,
- FIG 3: eine schematische Darstellung eines Polkörpers in Draufsicht mit einer vollständigen isolierend ausgeführten Beschichtung des Poleisens,
- FIG 4: einen vertikalen Querschnitt nach Linie IV-IV aus FIG 3,
- FIG 5: eine schematische Darstellung eines Polkörpers in Draufsicht, wobei die elektrisch aktive Kontur des Poleisens eine elektrisch isolierend ausgeführte Beschichtung aufweist und
- FIG 6: eine schematische Darstellung eines Polkörpers in Draufsicht, wobei die elektrisch kritischen Stellen des Poleisens eine elektrisch isolierend ausgeführte Beschichtung aufweisen.

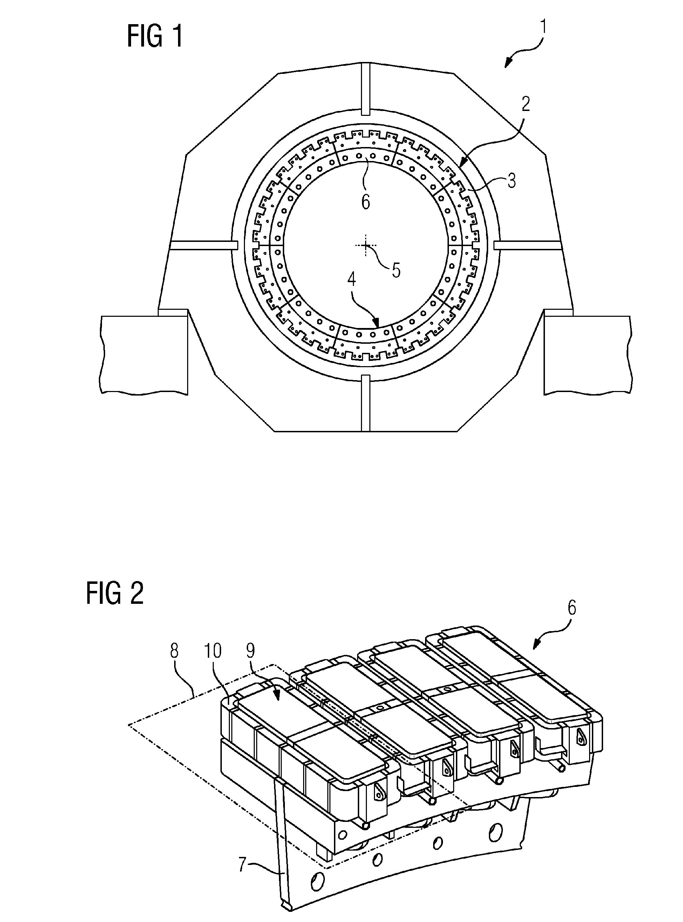

FIG 1 zeigt eine Synchronschenkelpolmaschine 1, insbesondere einen Ringmotor, welcher bevorzugt zum getriebelosen Antrieb von Rohrmühlen verwendet wird, in einer prinzipiellen Darstellung. Die dargestellte Maschine weist einen Stator 2 und einen Rotor 4 mit Polsegmenten 6 auf, wobei sich der Rotor 4 um eine Rotationsachse 5 dreht. Ein Luftspalt 3 befindet sich zwischen dem Stator 2 und dem Rotor 4. Bei derartigen langsam drehenden Synchronschenkelpolmaschinen, welche einen Rotordurchmesser von 15 Meter und mehr haben können, werden die Polsegmente 6 in segmentierter Bauweise ausgeführt.

FIG 2 zeigt eine dreidimensionale Darstellung eines vierpoligen Polsegments 6. Das Polsegment 6 weist eine Grundplatte 7 und ein Blechpaket 26 auf. Exemplarisch vier Polkörper 8, auch Erregerpole genannt, befinden sich auf dem Blechpaket. Ein Polkörper 8 weist ein Poleisen 9, welcher ein zahnförmiger Teil des Blechpakets 26 ist, und eine Erregerspule 10 auf, wobei die Erregerspule 10 um das Poleisen 9 gewickelt ist. Die Erregerspule 10 besteht bevorzugt aus Kupfer kann aber auch aus einem anderen nicht-magnetischen Metall mit hoher elektrischer Leitfähigkeit bestehen. Die Grundplatte 7 und das Blechpaket 26 mit den vier Poleisen 9 werden vorzugsweise aus Eisen gefertigt, können aber auch aus einem anderen weichmagnetischen Werkstoff bestehen. Die um das Poleisen 9 herum geführte Erregerspule 10 ist mechanisch aber elektrisch nicht leitend mit dem Poleisen 9 verbunden und liegt elektrisch nicht leitend auf dem Blechpaket 26 auf. Eine derartige isolierend ausgeführte Halterung erzeugt einen definierten Abstand zwischen der Erregerspule 10 und dem Poleisen 9 wodurch die einzelnen Polkörper 8 nahezu identische elektrische Eigenschaften aufweisen. Weiterhin wird die Erregerspule 10 so einfach, kostengünstig und verlustarm mechanisch fixiert. Die einzelnen Polsegmente 6 sind über Schrauben und/oder Bolzen an einem aus Gründen der Übersichtlichkeit nicht dargestellten Rotorflansch befestigt. Die elektrische Erregung der einzelnen Erregerspulen 10 erfolgt über Schleifringe.

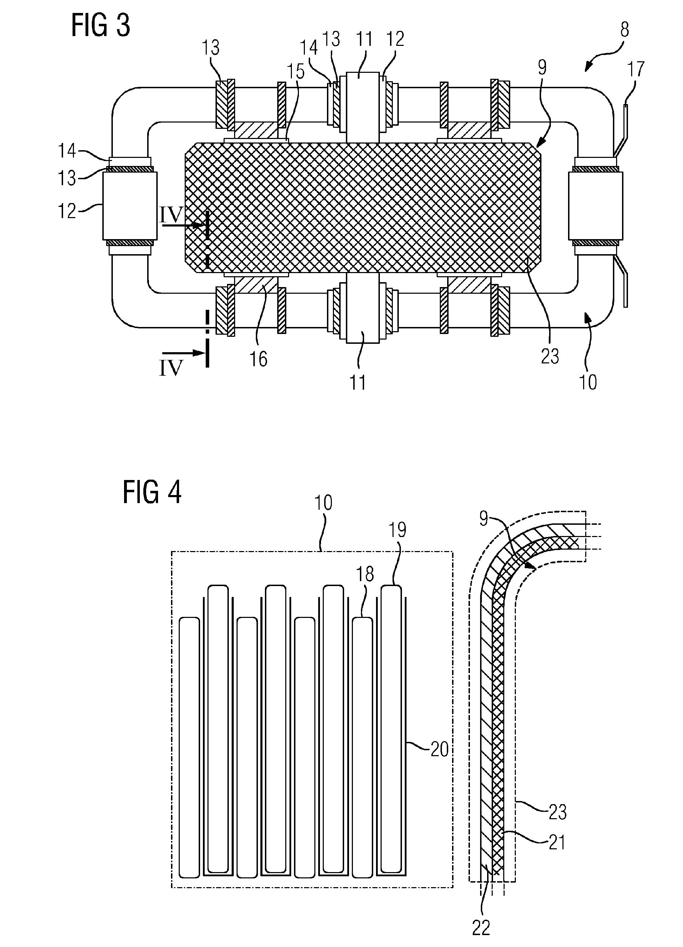

FIG 3 zeigt eine schematische Darstellung eines Polkörpers 8 in Draufsicht mit einer vollständigen isolierend ausgeführten Beschichtung 23 des Poleisens 9. Die Erregerspule 10, welche bevorzugt als Scheibenspule ausgeführt ist, ist um das Poleisen 9 herum gewickelt. Die Erregerspule 10, welche auch Läuferspule genannt wird, ist aus thermischen Gründen und aus Kostengründen nicht elektrisch isoliert ausgeführt. Die Erregerspule wird durch vier dielektrische Halterungen 16, welche sich an der Längsseite der Erregerspule befinden und eine Kriechwegverlängerung 15 aufweisen, auf einem definierten Abstand gehalten und liegt isoliert auf zwei an der Längsseite des Poleisens 9 angeschweißten Spulenauflagen 11 auf. An den Stellen, da Erregerspule 10 isoliert auf der am Poleisen 9 angeschweißten Spulenauflagen 11 aufliegt, ist die Erregerspule 10 zunächst mit einer Isolation 14, dann mit einem harzgegossenen Glasfaserband 13 umwickelt. Die Isolation 14 besteht vorzugsweise aus Nomex, einem hitzebeständigen und flammenbeständigen Aramidfasermaterial mit hoher Isolation und hoher elektrischer Durchschlagsfestigkeit. Die Isolation 14 und das harzgegossene Glasfaserband 13 umgibt eine Stahlkappe 12, mit welcher die Erregerspule 10 auf der am Poleisen 9 angeschweißten Spulenauflagen 11 aufliegt. An der Querseite der Erregerspule 10 liegt die Erregerspule 10 isoliert auf dem Blechpaket 26 auf. Die Auflage bildet auch hier eine Stahlkappe 12, welche durch eine Isolation 14 und ein harzgegossenes Glasfaserband 13 von der Erregerspule 10 isoliert ist. An einer der Auflagen auf dem Blechpaket 26 befindet sich eine Anschlusslasche 17 zur Stromzufuhr, welche vorzugsweise mit einem nicht in FIG 3 dargestellten Schleifring kontaktiert wird. Die Kriechwegverlängerung 15 an der dielektrischen Halterung 16 besteht vorzugsweise aus Nomex.

Das Poleisen 9 ist mit einer isolierend ausgeführten Beschichtung 23 komplett überzogen um einen Erdungsschluss beim Auftreten von Feuchtigkeit und/oder Verschmutzung zu verhindern. Ein Erdungsschluss hätte lange Wartezeiten während der Montage, der Inbetriebnahme oder während des Betriebes der Synchronschenkelpolmaschine zur Folge, wobei lange Wartezeiten zu nicht unerheblichen Ertragsausfällen führen können. Da eine Isolation der Erregerspule 10 aus thermischen Gründen sehr aufwendig und kostenintensiv ist, ist eine Isolation des Poleisens 9 einer Isolation der Erregerspule 10 vorzuziehen. Häufig ist mit einer elektrischen Isolation auch eine Erhöhung des thermischen Übergangswiderstandes verbunden. Das Poleisen 9 erwärmt sich während des Betriebs, im Vergleich zur stromdurchflossenen Erregerspule 10, nur geringfügig.

Die elektrisch isolierende Beschichtung kann zusätzlich bei Verwendung eines geeigneten Materials die Korrosion des Poleisens zu verhindern. Alternativ kann eine zweite Korrosionsschutzbeschichtung aufgetragen werden. Weiterhin kann die elektrisch isolierend ausgeführte Beschichtung 23 bei Verwendung eines geeigneten Materials und einer geeigneten Beschichtungsdicke zusätzlich zum mechanischen Schutz des Poleisens 9 verwendet werden. Dies ist weiterhin durch das Auftragen einer zusätzlichen robusteren Beschichtung, möglicherweise aus einem anderen Material, möglich. Eine derartige möglicherweise zusätzliche Beschichtung zum mechanischen Schutz des Poleisens 9 verhindert eine Beschädigung der Beschichtung 23 des Poleisens 9 während der Montage und/oder während des Transportes.

FIG 4 zeigt einen vertikalen Querschnitt nach Linie IV-IV aus FIG 3 mit einem Teil der Erregerspule 10 und einem Teil des Poleisens 9. Es sind die Wicklungen der als Schiebenspule ausgeführten Erregerspule 10 dargestellt, wobei die Erregerspule 10 abwechselnd mit zwei unterschiedlich breiten Kupferleitern, einer Kühlwindung 19 und einer Normalwindung 18, bewickelt wird, wobei sich am Rand der Erregerspule 10 zum Poleisen 9 hin zuerst eine Kühlwindung 19 befindet. U-förmig wird jede Kühlwindung von einer Spulenisolation 20 umschlossen, eine derartige Spulenisolation 20 wir auch U-Kappe genannt und besteht vorzugsweise aus Nomex oder einem anderen Isolator mit hoher elektrischer Durchschlagsfestigkeit. Die als U-Kappe ausgeführte Isolation 20 ist nach oben hin geöffnet. Durch die unterschiedliche Breite der Kühlwindungen 19 und der Normalwindungen 18 vergrößert sich die Oberfläche der Scheibenspule an dieser Stelle, wodurch sich die Erregerspule 10 im Vergleich zu einer Scheibenspule mit gleich breiten Leitern effizienter entwärmt.

Die elektrisch isolierend ausgeführte Beschichtung 23 des Poleisens 9 weist eine erste Beschichtung 21 und eine zweite Beschichtung 22 auf, wobei die erste Beschichtung 21 zur elektrischen Isolierung des Poleisens 9 gegenüber der Erregerspule 10 vorgesehen ist und die zweite Beschichtung 22 zum Schutz des Poleisens 9 vor Korrosion vorgesehen ist. Durch die mehrlagige Beschichtung 23 aus unterschiedlichen Materialien wird die Qualität der Beschichtung 23 verbessert. Beispielsweise können Materialien wie eine KTL-Lackierung, eine ALEXIT-Lackierung oder CERAMCOTE für die Beschichtung 23 des Poleisens 9 verwendet werden. Durch das Auftragen einer robusteren möglicherweise zusätzlichen Beschichtung ist ein mechanischer Schutz des Poleisens 9 möglich, welcher eine Beschädigung des Poleisens 9 und seiner Beschichtungen 21, 22 während der Montage und/oder während des Transportes verhindert.

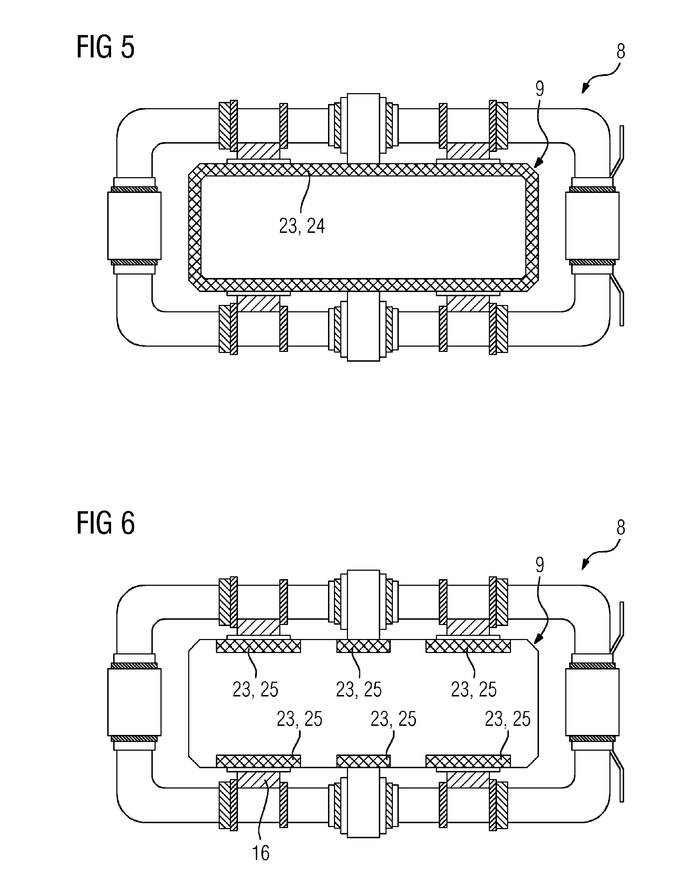

FIG 5 zeigt eine schematische Darstellung eines Polkörpers 8 in Draufsicht, wobei die elektrisch aktive Kontur 24 des Poleisens 9 eine elektrisch isolierend ausgeführte Beschichtung 23 aufweist. Als elektrisch aktive Kontur 24 bezeichnet man die Teile des Poleisens 9, welcher sich in unmittelbarer Nähe zur Erregerspule 10 befindet und wo die Wahrscheinlichkeit eines Erdungsschlusses sehr hoch ist. Je großflächiger der Bereich um die Erregerspule 10 elektrisch isolierend beschichtet wird, desto geringer ist die Wahrscheinlichkeit, dass Erdungsschlüsse auftreten. Während die elektrisch isolierend ausgeführte Beschichtung 23 in der in FIG 5 gezeigten Ausführungsform nur die elektrisch aktive Kontur 24 des Poleisens 9 bedeckt, kann das Poleisen 9 eine Beschichtung zum Korrosionsschutz und/oder eine Beschichtung zum mechanischen Schutz des Poleisens 9 an anderen Stellen oder auf dem kompletten Poleisen 9 aufweisen.

FIG 6 zeigt eine schematische Darstellung eines Polkörpers 8 in Draufsicht, wobei die elektrisch kritischen Stellen 25 des Poleisens 9 eine elektrisch isolierend ausgeführte Beschichtung 23 aufweisen. Als elektrisch kritische Stellen 25 des Poleisens 9 werden die Teile des Poleisens 9 bezeichnet, an denen die Erregerspule 10 mit dem Poleisens 9 mechanisch verbunden ist. An diesen Stellen kann es durch Feuchtigkeit oder Verschmutzung bei der Montage, der Inbetriebnahme oder während des Betriebes zu einer Überbrückung der elektrisch isolierenden Bauteile und damit zu einem Erdungsschluss kommen. Auch hier gilt, dass je großflächiger der Bereich um die Erregerspule 10 elektrisch isolierend beschichtet wird, desto geringer ist die Wahrscheinlichkeit, dass Erdungssschlüsse auftreten. Während die elektrisch isolierend ausgeführte Beschichtung 23 in der in FIG 6 gezeigten Ausführungsform nur die die elektrisch kritischen Stellen 25 des Poleisens 9 bedeckt, kann das Poleisen 9 eine Beschichtung zum Korrosionsschutz und/oder eine Beschichtung zum mechanischen Schutz des Poleisens 9 an anderen Stellen oder auf dem kompletten Poleisen 9 aufweisen.

Zusammenfassend betrifft die Erfindung einen Rotor 4 einer Synchronschenkelpolmaschine 1, insbesondere zum getriebelosen Antrieb von Rohrmühlen, mit einer Mehrzahl an Polsegmenten 6, welche kreisförmig um eine Rotationsachse 5 des Rotors 4 angeordnet sind, wobei ein Polsegment 6 mindestens einen Polkörper 8 aufweist, wobei ein Polkörper 8 ein Poleisen 9 und eine Erregerspule 10 aufweist, wobei die Erregerspule 10 um das Poleisen 9 gewickelt ist und wobei zumindest Teile des Poleisens 9 eine Beschichtung 23 aufweisen. Um, im Vergleich zum Stand der Technik, eine schnellere und günstigere Inbetriebnahme sowie einen effizienteren und kostengünstigeren Betrieb der Synchronschenkelpolmaschine 1 zu gewährleisten, wird vorgeschlagen die Beschichtung 23 elektrisch isolierend auszuführen und dafür vorzusehen, einen Kurzschluss zwischen der Erregerspule 10 und dem Poleisen 9 zu verhindern.

## Patentansprüche

1. Rotor (4) einer Synchronschenkelpolmaschine (1), insbesondere zum getriebelosen Antrieb von Rohrmühlen, mit einer Mehrzahl an Polsegmenten (6), welche kreisförmig um eine Rotationsachse (5) des Rotors (4) angeordnet sind, wobei ein Polsegment (6) mindestens einen Polkörper (8) aufweist, wobei ein Polkörper (8) ein Poleisen (9) und eine Erregerspule (10) aufweist, wobei die Erregerspule (10) um das Poleisen (9) gewickelt ist, wobei zumindest Teile des Poleisens (9) eine Beschichtung (23) aufweisen,
**dadurch gekennzeichnet, dass** die Beschichtung (23) elektrisch isolierend ausgeführt ist und dafür vorgesehen ist, einen Kurzschluss zwischen der Erregerspule (10) und dem Poleisen (9) zu verhindern.

2. Rotor (4) nach Anspruch 1,
**dadurch gekennzeichnet, dass** die Erregerspule (10) über eine dielektrische Halterung (16) mechanisch mit dem Poleisen (9) verbunden ist.

3. Rotor (4) nach Anspruch 2,
**dadurch gekennzeichnet, dass** die dielektrische Halterung (16) eine Kriechwegverlängerung (15) aufweist.

4. Rotor (4) nach einem der Ansprüche 1 bis 3,
**dadurch gekennzeichnet, dass** die Erregerspule (10) als Scheibenspule ausgeführt ist.

5. Rotor (4) nach einem der Ansprüche 1 bis 4,
**dadurch gekennzeichnet, dass** die elektrisch isolierend ausgeführte Beschichtung (23) zumindest auf einer elektrisch aktiven Kontur (24) des Poleisens (9) und/oder zumindest an einer kritischen Stelle (25) des Poleisens (9) aufgebracht ist.

6. Rotor (4) nach einem der Ansprüche 1 bis 5,
**dadurch gekennzeichnet, dass** die elektrisch isolierend ausgeführte Beschichtung (23) zusätzlich dafür vorgesehen ist, eine Korrosion des Poleisens (9) zu verhindern.

7. Rotor (4) nach einem der Ansprüche 1 bis 6,
**dadurch gekennzeichnet, dass** elektrisch isolierend ausgeführte Beschichtung (23) zusätzlich zum mechanischen Schutz des Poleisens (9) vorgesehen ist.

8. Rotor (4) nach einem der Ansprüche 1 bis 7,
**dadurch gekennzeichnet, dass** die elektrisch isolierend ausgeführte Beschichtung (23) des Poleisens (9) mehrlagig und/oder aus unterschiedlichen Materialen ausgeführt ist.

9. Rotor (4) nach einem der Ansprüche 1 bis 8,
**dadurch gekennzeichnet, dass** die elektrisch isolierend ausgeführte Beschichtung (23) des Poleisens (9) eine erste Beschichtung (21) und eine zweite Beschichtung (22) aufweist, wobei die erste Beschichtung (21) zur elektrischen Isolierung des Poleisens (9) gegenüber der Erregerspule (10) vorgesehen ist und die zweite Beschichtung (22) zum Schutz des Poleisens (9) vor Korrosion vorgesehen ist.

10. Rotor (4) nach einem der Ansprüche 1 bis 9,
**dadurch gekennzeichnet, dass** die elektrisch isolierend ausgeführte Beschichtung (23) des Poleisens (9) eine kathodische Tauchlackierung (KTL) und/oder eine keramische Beschichtung aufweist.

11. Synchronschenkelpolmaschine (1) mit mindestens einem Rotor (4) nach einem der Ansprüche 1 bis 10.
